Europäisches Patentamt

European Patent Office

Office européen des brevets

(11) Veröffentlichungsnummer: **0 072 774**
B1

# (12) EUROPÄISCHE PATENTSCHRIFT

(45) Veröffentlichungstag der Patentschrift:
11.09.85

(21) Anmeldenummer: 82810304.4

(22) Anmeldetag: 14.07.82

(51) Int. Cl.⁴: **H 02 K 7/118**, H 02 K 21/42, H 02 K 1/30

(54) Synchronmotor.

(30) Priorität: 19.08.81 CH 5353/81

(43) Veröffentlichungstag der Anmeldung:
23.02.83 Patentblatt 83/8

(45) Bekanntmachung des Hinweises auf die Patenterteilung:
11.09.85 Patentblatt 85/37

(84) Benannte Vertragsstaaten:
CH DE FR GB IT LI

(56) Entgegenhaltungen:
DE - A - 1 538 962
DE - A - 2 362 611
DE - A - 2 823 683
DE - A - 2 912 688
DE - C - 601 970
DE - C - 696 049
GB - A - 642 476
US - A - 3 172 689
US - A - 3 555 325

IBM TECHNICAL DISCLOSURE BULLETIN, Band 9, Nr. 7, Dezember 1966, Seite 769, New York, USA J.A. GORETZKI et al.: "Stepping motor with electromagnetically generated rotor flux"

(73) Patentinhaber: SODECO-SAIA SA, Rue du Grand-Prè 70, CH-1202 Genf (CH)

(72) Erfinder: Güttinger, Kurt, Pestalozzistrasse 24, CH-3280 Murten (CH)

(74) Vertreter: Steiner, Martin et al, c/o AMMANN PATENTANWAELTE AG BERN Schwarztorstrasse 31, CH-3001 Bern (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft einen Synchronmotor mit einer an der Innenseite des Stators befestigten Spule und mit einem Rotor, der beidseitig der Spule mit Weicheisenpolkränzen versehen ist, die mit den Enden eines die Spule durchragenden, vom Spulenfluß durchsetzten Kern hoher Permeabilität fest verbunden sind und permanentmagnetischen Statorpolen gegenüberliegen.

Derartige Synchron- bzw. Schrittschaltmotoren sind bekannt, z. B. aus der DE-OS 2 912 688 (Fig. 14) oder IBM Technical Disclosure Bulletin, Vol. 9, No. 7, December 1966. Der Rotor solcher Motoren besteht aus relativ leichten Teilen und weist somit ein geringes Trägheitsmoment bezogen auf die auf ihn wirkenden Antriebsdrehmomente auf. Es lassen sich daher Motoren relativ hoher Leistung bei üblichen Abmessungen erzielen. Die hohen Antriebsdrehmomente verbunden mit geringem Trägheitsmoment des Rotors führt anderseits zu Instabilitäten beim Anlauf und sogar beim normalen Lauf der Motors.

Der Erfindung liegt die Aufgabe zugrunde, einen Synchronmotor der oben umschriebenen Art mit einem minimalen Aufwand an Material und Raum so zu gestalten, daß er in allen Betriebszuständen stabil und zuverlässig arbeitet.

Die Lösung besteht darin, daß der Synchronmotor gemäß dem kennzeichnenden Teil des Patentanspruches 1 ausgebildet ist.

Die Scheibe bewirkt in ihrer einen Funktion eine Dämpfung des Rotors in dem Sinne, daß zu Instabilitäten führende Vibrationen wirksam gedämpft werden, ohne daß der Anlauf übermäßig behindert wird. In ihrer zweiten Funktion bewirkt die Scheibe eine Flußverschiebung in mindestens einem Weicheisenpolkranz und damit eine Verbesserung der Anlaufseigenschaften. Durch die eine zwischen zwei Polkränzen angeordnete Scheibe wird somit ohne bedeutenden Aufwand an Material und Raum ein Optimum an Wirkung zur Erzielung stabiler Bedingungen erreicht. Besteht die Scheibe aus Eisen, kann sie auch zur Leitung des magnetischen Flusses beitragen.

Vorzugsweise wird die Scheibe zwischen Weicheisenpolkränzen angeordnet, deren Polzähne axial zur Rotormitte gerichtet sind. Die radialen Flansche dieser Weicheisenpolkränze müssen hierbei ohnehin axial versetzt auf dem Rotorkern angebracht sein, so daß der Raum zwischen denselben zum Anbringen der Scheibe nutzbar ist. Eine axiale Verlängerung des Motors ergibt sich daraus nicht.

Es kann an beiden Rotorenden dieselbe Anordnung mit einer Dämpfungs- und Kurzschlußscheibe getroffen werden. Vorzugsweise wird aber diese Anordnung nur am einen Rotorende vorgesehen, während am anderen Rotorende Weicheisenpolkränze mit entgegengesetzt axial gerichteten Polzähnen angeordnet sind, wobei im Raume innerhalb der auswärts gerichteten Polzähne des äußeren Kranzes eine Anlaufsperre angeordnet ist. Auch hiermit wird eine optimale Raumausnutzung zusammen mit optimaler Führung des magnetischen Flusses erreicht.

Die Anlaufeigenschaften können weiter verbessert werden, indem der Rotor drehbar auf seiner Welle gelagert und zwischen diesen Teilen eine elastische Kupplung, insbesondere eine Schraubenfeder, angeordnet wird. Diese Schraubenfeder kann vorzugsweise in der Bohrung eines hohl ausgeführten Rotorkerns zwischen demselben und der die Bohrung durchsetzenden Rotorwelle angeordnet sein.

Eine besonders einfache und vorteilhafte Ausführung ergibt sich, wenn eine zylindrische Schraubenfeder beidseitig auf Büchsen aufgebracht wird, von welchen die eine in der Bohrung des hohlen Rotorkerns und die andere auf der Rotorwelle sitzt. Bei sinngemäßer Anordnung dieser Feder wirkt das durch sie zu übertragende Antriebsdrehmoment an beiden Verankerungsstellen verengend auf die Feder, womit eine stets schlupffreie Kupplung gewährleistet ist. Die eine der die Schraubenfeder haltenden Büchsen kann als Lagerbüchse zur Lagerung des hohlen Rotorkerns auf der Motorwelle dienen, und es können vorzugsweise zwei gleichartige Lagerbüchsen vorhanden sein.

Die Erfindung wird nun anhand eines in der Zeichnung dargestellten Ausführungsbeispiels und zweier Ausführungsvarianten näher erläutert.

Fig. 1 ist ein Axialschnitt nach Linie I-I in Fig. 2,

Fig. 2 ist eine Seitenansicht von rechts in Fig. 1 bei entferntem Lagerflansch und

Fig. 3 und 4 sind je ein Teil-Axialschnitt durch eine der Ausführungsvarianten.

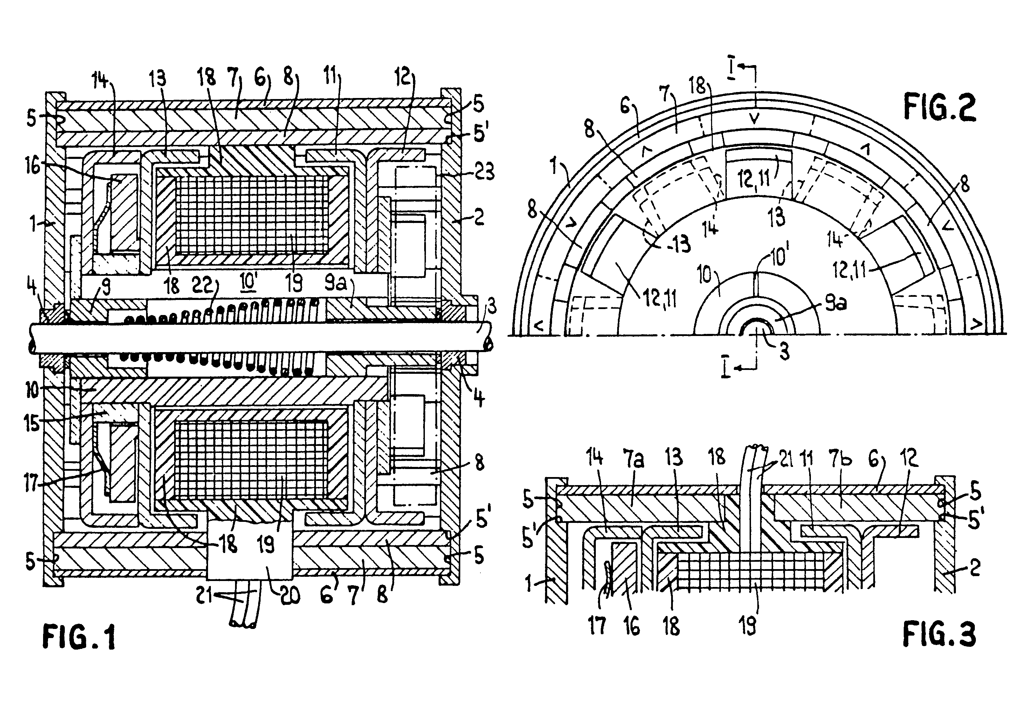

Der dargestellte Motor weist zwei Lagerflansche 1 und 2 auf, in welchen die Motorwelle mittels Lagern 4 gelagert ist. Beide Lagerflansche weisen an der Innenseite je eine Ringnut 5 auf. In diese Ringnuten 5 greifen Statorteile 6, 7 und 8 ein, nämlich ein äußerer Gehäusemantel 6 aus Weicheisen, ein ringförmiger Permanentmagnet 7 beispielsweise aus kunststoffgebundenem Bariumferrit und an der Innenseite dieses Permanentmagneten anliegende axial verlaufende Statorpole 8 aus Weicheisen. Die Statorpole 8 liegen mit ihren Enden an den inneren Enden 5' der Ringnuten 5 auf und sind damit bezüglich des Rotors in genau bestimmter radialer Lage unterstützt und gesichert. Wie in Fig. 2 angedeutet, ist der ringförmige Permanentmagnet derart radial magnetisiert, daß in den Weicheisenpolen 8 abwechselungsweise Nord- und Südpole entstehen.

Auf der Rotorwelle 3 ist mittels Lagerbüchsen 9 und 9a eine Rotornabe 10 aus Weicheisen drehbar gelagert, die oben einen durchgehenden Längsschlitz 10' zur Vermeidung von Wirbelströmen in dieser Nabe aufweist. An den Enden der Nabe 10 sind je zwei Kränze von Rotorpolen 11, 12 bzw. 13, 14 befestigt. Diese Polkränze sind als Stanzteile aus Weicheisen gefertigt. Während die Polkränze 11, 12 Rücken an Rücken mit nach entgegengesetzten Seiten gerichteten Polen angeordnet sind, sind die Polkränze 13, 14 in einem durch einen Distanzring 15 bestimmten Abstand mit nach innen gerichteten Polen ausgebildet. Der Distanzring 15 besteht aus Weicheisen und ist nicht geschlitzt, so daß er als Kurzschlußring wirkt. Wie aus den beiden Figuren ersichtlich ist, weisen die Pole 11 bis 14 des Rotors wesentlich geringere axiale Länge auf als die Pole 8 des Stators, so daß die Fläche der Rotorpole wesentlich geringer ist als die Fläche der Statorpole und somit auch wesentlich geringer als der Querschnitt des magnetischen Flusses im Permanentmagneten 7. Dieser Fluß wird also, wie bereits erwähnt, durch die Weicheisenpole 8 des Stators im Bereiche der Rotorpole 11 bis 14 konzentriert, und es wird damit eine erheblich höhere magnetische Induktion im Luftspalt erreicht, als wenn die Rotorpole direkt dem magnetisierten ringförmigen Permanentmagneten 7 gegenüberliegen würden. Wie bereits erwähnt, werden die Statorpole 8 in den Ringnuten 5 der Lagerflansche 1 und 2 genau konzentrisch bezüglich des Rotors und stabil gehalten, was die Einhaltung genauer Toleranzen erlaubt. Der Luftspalt zwischen den Stator- und Rotorpolen kann daher von den üblichen 0,5 auf 0,3 bis 0,4 mm verringert werden.

Im Raume zwischen den Polkränzen 13 und 14 befindet sich eine Dämpfungsscheibe 16 aus Messing oder Kupfer, welche lose drehbar auf dem Distanzring 15 angeordnet ist. Sie wird durch eine Sternfeder 17 gegen den inneren Polkranz 13 gedrückt, womit sich an der inneren begrenzten Auflagefläche zwischen dem Dämpfungsring 16 und dem Polkranz 13 eine definierte Reibung ergibt.

Zwischen den Polkränzen 11 und 13 des Rotors liegt der Spulenkörper 18 mit der Spule 19 des Motors. Der Spulenkörper ist in der Mitte des Stators befestigt. Ein Fortsatz 20 des Spulenkörpers dient der Durchführung der Anschlußdrähte 21. Die Polkränze 11 und 13 können soweit über die Spule nach innen gezogen sein, daß gerade noch genügend Platz für die Durchführung der Anschlußdrähte 21 verbleibt.

Zwischen der Rotornabe 10 und der Welle 3 ist am Hohlraum zwischen diesen Teilen eine Schraubenfeder 22 angeordnet, welche eine elastische Kupplung zwischen diesen Teilen bzw. zwischen dem Rotor und seiner Welle ergibt.

Zwischen dem Lagerflansch 2 und dem Polkranz 12 steht ein strichpunktiert angedeuteter Raum 23 für eine geeignete drehsinnbestimmenden Sperrvorrichtung zur Verfügung.

Der Polkranz 13, der Distanzring 15 und die Dämpfungsscheibe 16 wirken als Kurzschlußringe und bewirken damit eine Phasenverschiebung des Flusses in den Rotorpolen 14. Diese Pole 14 sind dementsprechend gegenüber den Polen 13 um den Betrag der Flußverschiebung, beispielsweise um 30° el., versetzt. Damit wird der Anlauf des Motors gewährleistet, wobei die Sperrvorrichtung einen Anlauf in der unerwünschten Richtung verhindert.

Die grundsätzliche Funktionsweise soweit sie nicht ohnehin oben erwähnt wurde, entspricht derjenigen bekannter Synchronmotoren entsprechender Art. Es werden daher im folgenden nur noch die speziellen Bedingungen und die sich daraus ergebenden Konsequenzen besprochen. Zur Herstellung des ringförmigen Stators kann man vorzugsweise von mindestens einer Platte oder einem Streifen aus verformbarem permanentmagnetischem Material ausgehen und dieselbe zu einem Zylinder oder einem segmentförmigen Teil dieses Zylinders formen. Die Statorpole 8 können vor oder nach dem Biegen aufgelegt werden und haften am magnetisierten Material genügend zur weiteren Montage. Zur genauen Orientierung der Statorpole 8 kann das verformbare permanentmagnetische Material an geeigneten Stellen aufgebogen werden, um Anschläge bzw. Orientierungsnocken für die Statorpole 8 zu bilden.

Gewisse Probleme bietet die Montage bzw. Aufhängung des Spulenkörpers 18 am Stator. Wie oben erwähnt, soll die radiale Position der Statorpole 8 durch ihre Anlage an den inneren Schultern 5' der Ringnuten 5 bezogen auf den Rotor sehr genau bestimmt sein. Es muß daher verhindert werden, daß der sich bei Erwärmung relativ stark dehnende Spulenkörper gegen die Statorpole drückt und dieselben nach außen drängen könnte. Die Statorspule wird daher mit etwas Spiel im Stator angeordnet, was in der Zeichnung nicht dargestellt ist, und sie wird nur mit radialen Fortsätzen, beispielsweise vier Fortsätzen, die in Ausnehmungen des Stators greifen, an demselben orientiert. Als einer dieser Fortsätze kann der Fortsatz 20 zur Durchführung der Anschlußdrähte dienen. Der Spulenkörper könnte auch durch zwischen den Statorpolen 8 axial verlaufende, an den Lagerflanschen 1 und 2 anliegende Distanzarme axial zentriert werden.

Wie eingangs erwähnt, zielt die Erfindung darauf ab, ein möglichst günstiges Verhältnis zwischen den auf den Rotor wirkenden Drehmomenten und dem Trägheitsmoment des Rotors zu erzielen. Hierbei besteht die Gefahr der Instabilität des Motors, insbesondere bei hohem Wirkungsgrad, indem die für Pulsationsmotoren typischen Pendelschwingungen auftreten. Um dieser Gefahr zu begegnen, ist die Dämpfungsscheibe 16 vorgesehen. Das Reibmoment zwischen dieser Scheibe und dem Rotor sollte so bemessen sein, daß bei den erwähnten Pendelschwingungen Reibungsverluste entstehen, welche den Rotor dämpfen und somit keine unzulässigen Instabilitäten auftreten lassen. Auch beim normalen Lauf des Motors kann die Dämpfungsscheibe noch leicht dämpfend wirken, indem bei der mit doppelter Netzfrequenz erfolgenden Drehzahlschwankung des Rotors ein gewisser Schlupf zwischen dem Rotor und der Dämpfungsscheibe auftritt. Das Reibmoment kann beispielsweise 1 bis 5% des Spitzenantriebsmomentes betragen.

Die oben erwähnten Pendelschwingungen können unter ganz bestimmten Voraussetzungen dazu führen, daß der Motor nicht anläuft. Dieser Gefahr kann dadurch vorgebeugt werden, daß **eine Sperrklinke so bemessen ist, daß ihre Prell-**frequenz nicht mit der Netzfrequenz bzw. der oben erwähnten Pendelschwingung oder Drehschwingung des Rotors übereinstimmt. Unter diesen Umständen ist dafür gesorgt, daß die Sperrklinke nicht unbedingt in jeder möglichen Sperrstellung wirksam wird und somit dem Rotor erlaubt aus einer stabilen Pendelschwingung herauszugelangen und dann definitiv anzulaufen.

Ein zuverlässiges Anlaufen des Motors wird weiter gewährleistet durch die zwischen dem Rotor und seiner Welle angeordnete Feder 22. Unabhängig von den äußeren Lastbedingungen bzw. dem Trägheitsmoment eines mit der Welle 3 gekuppelten Systems kann der Motor anlaufen und die Last allmählich beschleunigen. Dies kann sogar schrittweise erfolgen, indem der Motor anläuft bis das durch die Feder 22 übertragene Drehmoment das Antriebsmoment übersteigt und der Motor stehen bleibt bis er wieder anlaufen kann.

Die Ausführungsvariante nach Fig. 3 unterscheidet sich von der Ausführungsform nach Fig. 1 hauptsächlich dadurch, daß die Weicheisenpole 8 an der Innenseite des ringförmigen Permanentmagneten 7 wegfallen. Der Permanentmagnet ist in zwei Ringe 7a und 7b aufgeteilt, die einerseits auf der Innenschulter 5' der Nuten 5 und anderseits auf dem Außenring des Spulenkörpers 18 abgestützt sind. Um den Fluß der Permanentmagnete 7a und 7b möglichst voll auszunützen, können die Pole der Polkränze 11 bis 14 axial etwas länger ausgeführt werden als bei der Ausführung nach Fig. 1 und 2. Durch das Weglassen der Weicheisenpole 8 kann die Herstellung des Motors vereinfacht und der Preis gesenkt werden, wobei allerdings eine Einbuße an Leistung bzw. spezifischer Leistung in Kauf genommen werden muß.

Es sind verschiedene weitere Ausführungsvarianten möglich. Die gezeigten Lösungen sind nicht nur für Kleinsynchronmotoren besonders hoher Leistung und hohen Wirkungsgrades von Interesse, sondern können mit Vorteil auch für kleinere Motoren verwendet werden, deren Betriebsbedingungen weniger kritisch sind. Entsprechend können dann bestimmte Hilfsmaßnahmen wegfallen, beispielsweise die zwischen dem Rotor und der Welle 3 angeordnete Feder oder dergleichen elastische Kupplung. Es ist auch möglich, die Spulenanschlüsse anstatt radial nach außen radial zwischen zwei benachbarten Polen 8 des Stators und durch einen der Lagerflansche herauszuführen. In diesem Falle wäre es auch möglich, anstelle eines zylindrischen, gebogenen Außenmantels 6 einen mehrlagigen Wickel aus dünnem Weicheisenblech als magnetischen Rückschluß aufzubringen.

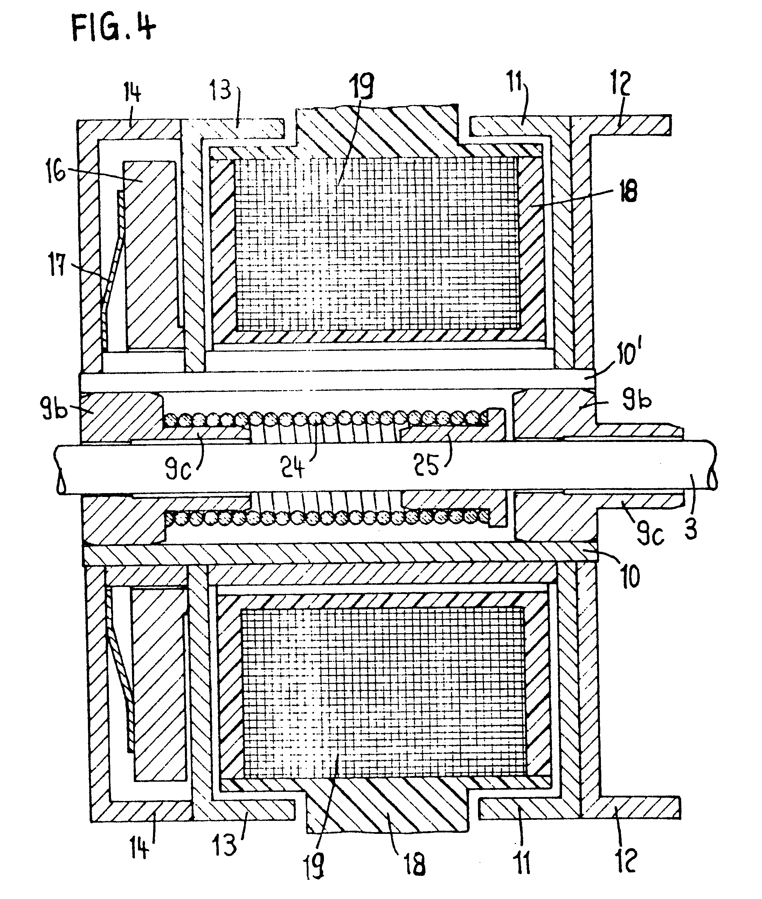

Fig. 4 zeigt eine Ausführungsvariante, in der entsprechende Teile gleich bezeichnet sind wie in den übrigen Figuren und nicht näher erläutert werden. Anstelle der verschieden ausgeführten Lager 9 und 9a sind zur Lagerung des Kerns 10 auf der Welle 3 zwei gleiche Lagerbüchsen 9b mit je einem verjüngten Fortsatz 9c vorgesehen. Der nach innen gerichtete Fortsatz 9c der einen Lagerbüchse dient als Halter für das eine Ende einer Schraubenfeder 24, deren anderes Ende mit einer fest auf der Welle 3 sitzenden Büchse 25 verbunden ist. Diese Ausführung erlaubt die Verwendung einer einfachen Schraubenfeder, und die Montage derselben ist einfacher. Das zu übertragende Drehmoment kann an beiden Enden der Feder verengend auf dieselbe wirken, was eine sichere Übertragung des Drehmomentes ohne jeden Schlupf erlaubt. Der nach außen gerichtete Fortsatz 9c der anderen Lagerbüchse 9b kann der Montage eines Teils der nicht dargestellten Anlaufsperre dienen.

## Patentansprüche

1. Synchronmotor mit einer an der Innenseite des Stators befestigten Spule (19) und mit einem Rotor, der beidseitig der Spule Weicheisenpolkränze (11—14) aufweist, die mit den Enden eines die Spule durchragenden, vom Spulenfluß durchsetzten Kerns (10) hoher Permeabilität fest verbunden sind und permanentmagnetischen Statorpolen (8) gegenüberliegen, dadurch gekennzeichnet, daß an mindestens einem Ende des Kerns (10) zwischen zwei in Axialrichtung versetzten Weicheisenpolkränzen (13, 14) eine metallische Scheibe (16) mit bestimmter Reibung lose auf dem Rotor angeordnet ist, die zugleich als Dämpfungs- und als Kurzschlußscheibe zur Flußverschiebung wirkt, wobei der bezüglich der Motormitte der äußeren Fläche der metallischen Scheibe (16) benachbarte Polkranz (14) gegenüber dem bezüglich der Motormitte der inneren Fläche der metallischen Scheibe (16) benachbarten Polkranz (13) in Umfangsrichtung um einen der durch die metallische Scheibe (16) bewirkten Flußverschiebung entsprechenden Winkel versetzt ist.

2. Motor nach Anspruch 1, dadurch gekennzeichnet, daß die beiden Weicheisenpolkränze (13, 14), zwischen welchen die metallische Scheibe (16) angeordnet ist, mit axial zur Rotormitte gerichteten Polzähnen auf dem Kern (10) angeordnet sind.

3. Motor nach Anspruch 2, dadurch gekennzeichnet, daß am einen des Kerns (10) Weicheisenpolkränze (13, 14) mit axial nach der Rotormitte gerichteten Polzähnen und dazwischen liegender metallischer Scheibe (16) und am anderen Ende des Kerns zwei Weicheisenpolkränze mit entgegengesetzt axial gerichteten Polzähnen vorgesehen sind, wobei am anderen Ende im Raume innerhalb der Polzähne des äußeren Polkranzes eine Anlaufsperre angeordnet ist.

4. Motor nach einem der Ansprüche 1 bis 3, dadurch gekennzeichnet, daß die Masse und das Reibmoment der auf dem Rotor drehbaren metallischen Scheibe (16) so bemessen sind, daß die dem Pulsationsmotor eigenen Pendelschwingungen gedämpft werden und der Rotorlauf stabilisiert wird.

5. Motor nach einem der Ansprüche 1 bis 4, dadurch gekennzeichnet, daß alle Weicheisenpolkränze (11, 12, 13, 14) des Rotors identisch ausgeführt sind.

6. Motor nach einem der Ansprüche 1 bis 5, dadurch gekennzeichnet, daß die metallische Scheibe (16) aus magnetisch leitendem Material, insbesondere Eisen, besteht.

7. Motor nach einem der Ansprüche 1 bis 6, dadurch gekennzeichnet, daß ein hohler Kern (10) vorgesehen ist, der auf der Motorwelle (3) drehbar gelagert ist und in dessen Bohrung zwischen dem Kern (10) und der Motorwelle (3) eine elastische Kupplung, z. B. eine Schraubenfeder (22) angeordnet ist.

8. Motor nach Anspruch 7, dadurch gekennzeichnet, daß eine zylindrischen Schraubenfeder (24) mit ihrem einen Ende auf eine mit dem hohlen Kern (10) und mit ihrem anderen Ende auf eine mit der Motorwelle (3) verbundene Büchse (9b bzw. 25) aufgebracht ist.

9. Motor nach Anspruch 8, dadurch gekennzeichnet, daß im hohlen Kern (10) zwei gleiche Lagerbüchsen (9b) befestigt sind, die je einen verjüngten Fortsatz aufweisen und mittels welcher er auf der Motorwelle (3) gelagert ist, wobei auf den Fortsatz der einen Lagerbüchse das eine Ende der Schraubenfeder (24) aufgesetzt ist.

## Claims

1. Synchronous motor with a coil (19) fastened at the inner part of the stator and with a rotor comprising at both sides of the coil pole arms of soft iron (11—14) which are fastened to the ends of a core (10) of high permeability passing through the coil and traversed by the flux of the coil and facing the poles of a permanent magnet of the stator, characterized in that a metallic disc (16) acting both as a damping and short-circuiting disc produces a shifting of the flux and is loosely mounted with a determined friction on the rotor at least at one end of the core (10) between two axially shifted pole arms (13, 14), the pole arm (14) adjoining the external face of the metallic disc (16) with respect to the center of the motor being shifted in the peripheral direction with respect to the pole arm (3) adjoining the internal face of the metallic disc (16) with respect to the center of the motor of an angle corresponding to the shifting of the flux produced by the metallic disc (16).

2. Motor according to claim 1, characterized in that the two pole arms of soft iron (13, 14) between which the metallic disc (16) is disposed are arranged on the core (10) with the pole teeth directed axially toward the center of the rotor.

3. Motor according to claim 2, characterized in that pole armes (13, 14) with the pole teeth directed axially toward the center of the rotor and comprising between them the metallic disc (16) are provided at one end of the core (10) and at the other end of the core are provided two pole arms of soft iron with the pole teeth directed axially in opposite directions, a unidirectional starting mechanism being disposed at the other end in the inner space of the pole teeth of the external pole arm.

4. Motor according to one of the claims 1 to 3, characterized in that the mass and the moment of friction of the metallic disc (16) turning on the rotor are so dimensioned that the own pendulum oscillations of the pulsation motor are damped and the running of the rotor is stabilized.

5. Motor according to one of the claims 1 to 4, characterized in that all pole arms (11, 12, 13, 14) of the rotor are of identical design.

6. Motor according to one of the claims 1 to 5, characterized in that the metallic disc (16) is of magnetically conducting material, particularly iron.

7. Motor according to one of the claims 1 to 6, characterized in that a hollow core (10) is provided which is rotatably mounted on the shaft (3) of the motor and in that a resilient coupling, e. g. a coil spring (22), is disposed in the hole thereof between the core (10) and the shaft (3) of the motor.

8. Motor according to claim 7, characterized in that a cylindrical coil spring (24) is provided with one of its ends on a bush (9b) fastened to the hollow core (10) and with its other end on a bush (25) fastened to the shaft (3) of the motor.

9. Motor according to claim 8, characterized in that two same bearing bushings (9b) are fastened in the hollow core (10), each one of these bearing bushings comprising a projection of reduced diameter acting as a bearing for the shaft (3) of the motor, an end of the coil spring (24) being provided on the projection of one of the bearing bushings.

## Revendications

1. Moteur synchrone avec une bobine (19) fixée à la partie intérieure du stator et avec un rotor comprenant des deux côtés de la bobine des couronnes polaires en fer doux (11—14) qui sont fixées aux extrémités d'un noyau (10) à haute perméabilité passant à travers la bobine et traversé par le flux de la bobine et disposées en face des poles d'un aimant permanent du stator, caractérisé en ce qu'un disque métallique (16) agissant à la fois comme disque d'amortissement et de court-circuit produisant un décalage du flux est disposé fou avec un frottement déterminé sur le rotor à au moins une extrémité du noyau (10) entre deux couronnes polaires (13, 14) décalées axialement, la couronne polaire (14) voisine de la face extérieure du disque métallique (16) par rapport au centre du moteur étant décalée en direction périphérique d'un angle correspondant au décalage du flux par le disque métallique (16) par rapport à la couronne polaire (13) voisine de la face intérieure du disque métallique (16) par rapport au centre du moteur.

2. Moteur selon la revendication 1, caractérisé en ce que les deux couronnes polaires en fer doux (13, 14) entre lesquelles est disposé le disque métallique (16) sont disposées sur le noyau (10) avec des dents polaires dirigées axialement vers le centre du rotor.

3. Moteur selon la revendication 2, caractérisé en ce qu'il est prévu à une extrémité du noyau (10) des couronnes polaires (13, 14) avec des dents polaires dirigées axialement vers le centre du rotor et comprenant entre elles le disque métallique (16) et à l'autre extrémité du noyau deux couronnes polaires en fer doux avec des dents polaires dirigées axialement dans des directions opposées, un mécanisme de démarrage unidirectionnel étant disposé à l'autre extrémité dans l'espace intérieur des dents polaires de la couronne polaire extérieure.

4. Moteur selon l'une des revendications 1 à 3, caractérisé en ce que la masse et le moment de frottement du disque métallique (16) tournant sur le rotor sont dimensionnés de manière que les oscillations pendulaires propres du moteur à pulsations sont amorties et que la marche du rotor est stabilisée.

5. Moteur selon l'une des revendications 1 à 4, caractérisé en ce que toutes les couronnes polaires (11, 12, 13, 14) sont d'exécution identique.

6. Moteur selon l'une des revendications 1 à 5, caractérisé en ce que le disque métallique (16) est en matériau en ce que le disque métallique (16) est en matériau magnétiquement conducteur, en particulier en fer.

7. Moteur selon l'une des revendications 1 à 6, caractérisé en ce qu'il est prévu un noyau creux (10) qui est monté tournant sur l'arbre (3) du moteur et en ce qu'un accouplement élastique, par exemple un ressort hélicoïdal (22), est disposé dans son alésage, entre le noyau (10) et l'arbre (3) du moteur.

8. Moteur selon la revendication 7, caractérisé en ce qu'un ressort hélicoïdal cylindrique (24) est logé avec l'une de ses extrémités sur une douille (9b) fixée au noyau creux (10) et avec l'autre extrémité sur une douille (25) fixée à l'arbre (3) du moteur.

9. Moteur selon la revendication 8, caractérisé en ce que deux mêmes coussinets (9b) sont fixés dans le noyau creux (10), chacun de ces coussinets comprenant une portée de diamètre réduit servant de palier à l'arbre (3) du moteur, une extrémité du ressort hélicoïdal (24) étant logée sur la portée de l'un des coussinets.

FIG.1

FIG.2

FIG.3

0 072 774

# FIG.4